# EUROPEAN PATENT APPLICATION

(11) **EP 4 254 356 A1**
(43) Date of publication of application: **04.10.2023**
(21) Application number: 22197928.9
(22) Date of filing: 27.09.2022
(51) Int. Cl.: G06V 10/74, G06V 10/80, G06V 10/98, G06V 30/412, G06V 30/416, G06V 30/418, G06V 30/42

(54) **INFORMATION PROCESSING APPARATUS, PROGRAM, AND METHOD FOR PROCESSING INFORMATION**

(30) Priority: 28.03.2022 JP 2022052257
(71) Applicant: Fujifilm Business Innovation Corp., Tokyo 107-0052 (JP)
(72) Inventor: BAN, Masashi, Yokohama (JP)
(74) Representative: Meissner Bolte Partnerschaft mbB

(57) **Abstract**

An information processing apparatus includes a processor configured to: obtain related information regarding a first form; identify a second form associated with related information similar to the related information regarding the first form; obtain definition information indicating a definition of processing for a check on information written on the second form as items; and output the definition information as a candidate for definition information to be applied to items on the first form.

## Description

### Background

### (i) Technical Field

The present disclosure relates to an information processing apparatus, a program, and a method for processing information.

### (ii) Related Art

In information processing apparatuses that perform optical character recognition (OCR) on an optically read image of a form, a technique for checking whether the OCR has been successfully performed using data extracted from the form through the OCR. Japanese Unexamined Patent Application Publication No. 2000-155802, for example, discloses a technique used by OCR input data screen correction means for performing OCR on items written on a form and correcting a result of the OCR. In this technique, recognition result management means for holding a recognition result of one form, obtaining a recognition result in each of fields, and holding a page image of one form, character field correction means for obtaining the recognition result in each of the fields from the recognition result management means, displaying and correcting the recognition result, and, if the recognition result has been corrected, transmitting the corrected recognition result to the recognition result management means, and image display means for displaying an image of each of the fields or the entirety of the page image received from the recognition result management means are included.

Japanese Unexamined Patent Application Publication No. 2014-044631 discloses a technique used by a data check apparatus that checks data in accordance with a program for performing a data check. In this technique, check condition incorporation means for incorporating a check condition file according to a data format of data to be checked into a data check base program unit, into which any of check condition files prepared for different data formats can be incorporated, to generate a program for performing a data check on the data and check procedure control means for checking the data in accordance with the generated program for performing a data check.

Japanese Unexamined Patent Application Publication No. 04-354080 discloses a technique for an OCR data input method, for which an OCR apparatus and an OCR data input program are used, for reading OCR data written on a form, checking general logic errors, and correcting, if necessary, correcting and inputting a result of the reading under control of the OCR data input program. In this technique, a user program for performing a logic error check, which is unique to each of users, on read OCR data is provided. The OCR data input program sets a call relationship for the user program at a processing stage by which character data has been read from a form using the OCR data input program and a processing stage by which errors in the read OCR data have been corrected. The user program then performs a detailed logic check on the OCR data at each of the processing stages.

### Summary

An information processing apparatus that processes information written on a form might be required to perform processing for checking the information written on the form, that is, for example, check processing for checking that character strings match information stored in a system database. In this case, the check processing is defined for each of items written on the form. Definition information, in which processing for checking items written on a form is defined, increases in size as the number of forms increases. The same check processing might be defined for items on different forms, but when definition information is simply accumulated, it takes an enormous amount of processing to select a piece of definition information desired by a user from a plurality of pieces of definition information. It is therefore difficult for the user to use definition information regarding the same check processing. Consequently, a burden on the user undesirably increases when the user needs to define check processing for each of items written on a form.

Accordingly, it is an object of the present disclosure to provide an information processing apparatus, a program, and a method for processing information capable of reducing a burden on a user when processing for checking information written on forms is defined, compared to when processing is defined for each of items written on forms.

According to a first aspect of the present disclosure, there is provided an information processing apparatus including a processor configured to: obtain related information regarding a first form; identify a second form associated with related information similar to the related information regarding the first form; obtain definition information indicating a definition of processing for a check on information written on the second form as items; and output the definition information as a candidate for definition information to be applied to items on the first form.

According to a second aspect of the present disclosure, there is provided the information processing apparatus according to the first aspect, in which the related information indicates at least image information regarding a form or identification information for identifying the definition information.

According to a third aspect of the present disclosure, there is provided the information processing apparatus according to the first aspect, in which the processor is configured to, if a plurality of pieces of definition information are obtained as the definition information, output the definition information in descending order of a degree of similarity.

According to a fourth aspect of the present disclosure, there is provided the information processing apparatus according to any of the first to third aspects, in which the processor is configured to output information indicating the processing for the check corresponding to the obtained definition information.

According to a fifth aspect of the present disclosure, there is provided the information processing apparatus according to the fourth aspect, in which the processor is configured to output information indicating a result of execution of the processing for the check corresponding to the obtained definition information.

According to a sixth aspect of the present disclosure, there is provided the information processing apparatus according to the fifth aspect, in which the result is a result of execution of the processing for the check based on a parameter of the processing for the check input by a user.

According to a seventh aspect of the present disclosure, there is provided the information processing apparatus according to the fifth aspect, the result is a result of execution of the processing for the check on the items on the first form.

According to an eighth aspect of the present disclosure, there is provided the information processing apparatus according to the seventh aspect, in which the processor is configured to receive, from a user, selection of one of the items on the first form on which the processing for the check is to be performed.

According to a ninth aspect of the present disclosure, there is provided the information processing apparatus according to any of the first to fifth aspects, in which the processor is configured to, if a plurality of pieces of definition information are obtained as the definition information, output one of the plurality of pieces of definition information obtained as the definition information such that the one of the plurality of pieces of definition information is selectable.

According to a tenth aspect of the present disclosure, there is provided a program causing a processor to execute a process for processing information, the process including obtain related information regarding a first form, identify a second form associated with related information similar to the related information regarding the first form, obtain definition information indicating a definition of processing for a check on information written on the second form as items, and output the definition information as a candidate for definition information to be applied to items on the first form.

According to an eleventh aspect of the present disclosure, there is provided a method for processing information, the method including obtaining related information regarding a first form, identifying a second form associated with related information similar to the related information regarding the first form, obtaining definition information indicating a definition of processing for a check on information written on the second form as items, and outputting the definition information as a candidate for definition information to be applied to items on the first form.

According to the first, tenth, and eleventh aspects of the present disclosure, a burden on a user when processing for checking information written on forms is defined can be reduced, compared to when the processing is defined for each of items written on forms.

According to the second aspect, the burden on the user when processing for checking information written on forms is defined can be reduced, compared to when image information and identification information are not taken into consideration.

According to the third aspect, a piece of definition information more similar than other pieces of definition information can be output first, unlike when a plurality of pieces of definition information are simply output.

According to the fourth aspect, the burden on the user when processing for a check is defined can be reduced, compared to when information indicating the processing for a check is not output.

According to the fifth aspect, a burden on the user when processing for checking definition information is performed can be reduced, compared to when information is output without performing the processing for checking definition information.

According to the sixth aspect, the user's intention can be reflected compared when a parameter input by the user is not used.

According to the seventh aspect, a burden on the user when processing that reflects the user's intention is checked can be reduced, compared to when a result of execution of the processing for the check is not output.

According to the eighth aspect, a burden on the user when definition information is set can be reduced, compared to when one of a plurality of pieces of definition information is not output in a selectable manner.

According to the ninth aspect, a burden on the user in making settings can be reduced, compared to when a plurality of pieces of definition information are just output.

### Brief Description of the Drawings

An exemplary embodiment of the present disclosure will be described in detail based on the following figures, wherein:
Fig. 1 is a diagram illustrating a schematic configuration of a form system according to an exemplary embodiment;
Fig. 2 is a diagram illustrating an example of an electrical schematic configuration of an information processing apparatus according to the exemplary embodiment;
Fig. 3 is a diagram illustrating an example of a functional configuration of the information processing apparatus according to the exemplary embodiment;
Fig. 4 is a flowchart illustrating an example of a procedure of information processing achieved by an information processing program according to the exemplary embodiment;
Fig. 5 is a diagram illustrating an example of a setting screen relating to operation check settings;
Fig. 6 is a diagram illustrating an example of a setting screen relating to a process for editing the operation check settings;
Fig. 7 is a flowchart illustrating an example of a procedure of a process for using existing definitions;
Fig. 8 is a diagram illustrating an example of a display screen in the process for using existing definitions;
Fig. 9 is a diagram illustrating an example of a display screen at a time when an operation check is specified;
Fig. 10 is a diagram illustrating an example of a setting screen relating to a process for editing operation check settings;
Fig. 11 is a flowchart illustrating an example of a procedure of a search process;
Fig. 12 is a diagram illustrating an example of a display screen in the search process;
Fig. 13 is a flowchart illustrating an example of a procedure of a check process;
Fig. 14 is a diagram illustrating an example of a check screen in the check process;
Fig. 15 is a flowchart illustrating an example of a procedure of a process for verifying introduction; and
Fig. 16 is a diagram illustrating an example of a check screen in the process for verifying introduction.

### Detailed Description

An exemplary embodiment for implementing the techniques in the present disclosure will be described in detail hereinafter with reference to the drawings. Components and steps having the same operations, actions, or functions are given the same reference numerals throughout the drawings, and redundant description thereof might be omitted as necessary. The drawings are only shown in a schematic manner so that the techniques in the present disclosure can be fully understood. The techniques in the present disclosure, therefore, are not limited to illustrated examples. In the exemplary embodiment, description of elements that are not directly related to the present disclosure and known elements might be omitted.

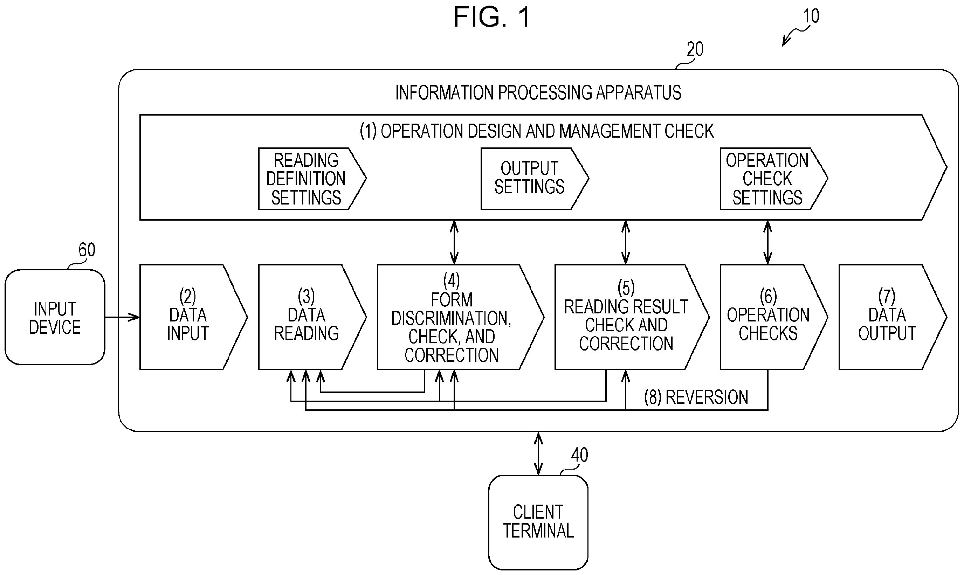

Fig. 1 is a diagram illustrating a schematic configuration of a form system 10 according to the present exemplary embodiment.

As illustrated in Fig. 1, the form system 10 includes an information processing apparatus 20, a client terminal 40, and an input device 60. These apparatuses are connected to a network, which is not illustrated, and communicable with one another over the network. The network is, for example, the Internet, a local area network, a wide area network (WAN), or the like.

The information processing apparatus 20 manages a series of processes in which OCR is performed on image data regarding a plurality of pages of a document including forms input through the input device 60 and a result of the OCR is output to a predetermined destination. A specific configuration and operations of the information processing apparatus 20 will be described later.

The client terminal 40 transmits various instructions relating to OCR to the information processing apparatus 20. The various instructions include, for example, an instruction to start to read information regarding image data and an instruction to display a result of reading of information regarding image data. The client terminal 40 also displays, in accordance with various received instructions, various pieces of information including a result of OCR performed by the information processing apparatus 20 and a notification about OCR. The client terminal 40 is, for example, a server computer or a general-purpose computer such as a personal computer (PC). Although Fig. 1 illustrates only one client terminal 40, a plurality of client terminals 40 may be provided, instead, and used for, for example, different types of processing.

The input device 60 inputs image data to be subjected to OCR to the information processing apparatus 20. The input device 60 is, for example, a server computer, a general-purpose computer such as a PC, or an image forming apparatus having a scanning function, a printing function, a facsimile function, and/or the like. In addition to the input device 60, the client terminal 40 may also be capable of inputting image data to the information processing apparatus 20.

Next, an outline of the form system 10 will be described.

In the form system 10, the information processing apparatus 20 performs OCR on image data input through the input device 60 and outputs a result of the OCR to a predetermined destination.

In the OCR, the information processing apparatus 20 manages various processes including (1) operation design and management check, (2) data input, (3) data reading, (4) form discrimination, check, and correction, (5) reading result check and correction, (6) operation checks, (7) data output, and (8) reversion. In the present exemplary embodiment, the OCR includes not only a process for reading characters, signs, and the like from image data but also post-processing such as correction of characters.

In an example of the management of the various processes, the information processing apparatus 20 automatically performs (1) operation design and management check, (2) data input, (3) data reading, (6) operation checks, and (7) data output. As for (4) form discrimination, check, and correction and (5) reading result check and correction, a user makes inputs using the client terminal 40. The information processing apparatus 20 may automatically perform (8) reversion, or the user may make an input for (8) reversion using the client terminal 40.

In (1) operation design and management check, job rules including reading definition settings, output settings, and operation check settings are created. In the reading definition settings, for example, reading areas, in which image data is to be read in (3) data reading, are set. More specifically, for example, a definition is set such that item values, which are values to be read, to the right of items to be extracted as keys will be read. In the output settings, for example, a file format and a destination of data output in (7) data output are set. In the operation check settings, for example, a format including required input items and the number of characters that can be input on forms to be detected in (6) operation checks is set.

In (2) data input, image data is input from the input device 60. The input image data is registered as a job, which is a unit for which (3) data reading is to be performed.

In (3) data reading, the image data in the job is read using some job rules selected by the user for the job from the job rules created in (1) operation design and management check. In this process, for example, discrimination of forms included in the image data in the job (hereinafter referred to as "form discrimination") and reading of characters and signs in the reading areas are performed.

In (4) form discrimination, check, and correction, the image data in the job is divided into records indicating the form included in the job on the basis of a result of the forms discrimination performed in (3) data reading. The records are then displayed in this process, and the user checks and corrects the result of the form discrimination.

In (5) reading result check and correction, a result of the reading of characters and signs in the reading areas performed in (3) data reading is displayed, and the user checks and corrects the result of the reading.

In (6) operation checks, errors in each of the preceding processes are detected on the basis of the operation check settings included in the job rules selected by the user for the job from the job rules created in (1) operation design and management check. A result of the detection may be presented to the user.

In (7) data output, output data is created and output to a predetermined destination using the output settings included in the job rules selected by the user for the job from the job rules created in (1) operation design and management check.

In (8) reversion, a process performed in the OCR is reverted to another process one or more steps before. For example, the user requests reversion using the client terminal 40 during (4) form discrimination, check, and correction, (5) reading result check and correction, or the like. Alternatively, for example, a manager requests reversion using his/her client terminal 40 in accordance with a result of a check conducted by the manager between (6) operation checks and (7) data output.

In the OCR, (1) operation design and management check is performed before (3) data reading and the later processes are performed, that is, before the form system 10 is operated. Alternatively, (1) operation design and management check may be performed while (3) data reading or one of the later processes is being performed, that is, while the form system 10 is being operated. For example, the job rules created in (1) operation design and management check before the form system 10 is operated may be corrected in accordance with a result of (5) reading result check and correction, which is performed while the form system 10 is being operated.

### Information Processing Apparatus

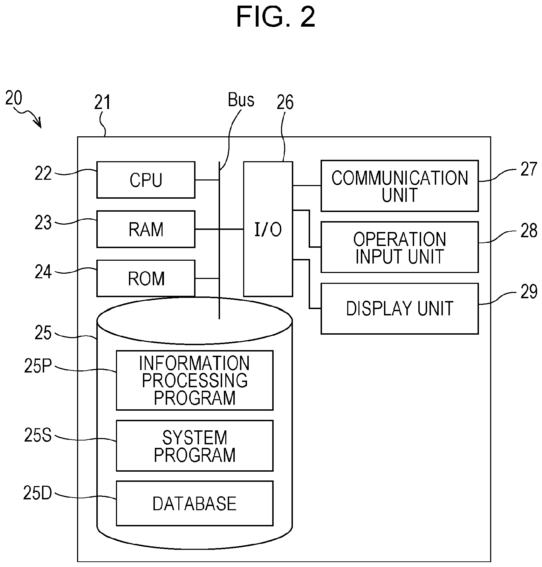

Next, an example of the configuration of the information processing apparatus 20 will be described with reference to Fig. 2. Fig. 2 is a diagram illustrating an example of an electrical schematic configuration of the information processing apparatus 20 according to the present exemplary embodiment. The information processing apparatus 20 is, for example, a server computer or a general-purpose computer such as a PC.

More specifically, as illustrated in Fig. 2, the information processing apparatus 20 includes a computer 21. The computer 21 includes a central processing unit (CPU) 22, a random-access memory (RAM) 23, a read-only memory (ROM) 24, a storage unit 25, and an input/output port (I/O) 26. The CPU 22, the RAM 23, the ROM 24, the storage unit 25, and the I/O 26 are connected to one another by a bus Bus.

Functional units such as a communication unit 27 for achieving communication with external apparatuses, an operation input unit 28 that enables the user to input operations, and a display unit 29 that displays images are connected to the I/O 26. These functional units can communicate with the CPU 22 through the I/O 26.

The computer 21 may be achieved as a sub-control unit that controls a part of the information processing apparatus 20 or may be achieved as a control unit that controls the entirety of the information processing apparatus 20. An integrated circuit (IC) such as a large-scale integration (LSI) circuit or an IC chipset, for example, is used for a part or the entirety of each of blocks of the computer 21. Independent circuits may be used for different blocks, or a circuit on which some or all of the blocks are integrated together may be used. The blocks may be integrated with one another, or some blocks may be separately provided. In each of the blocks, a part of the block may be separately provided. The computer 21 need not be integrated using an LSI circuit, and a dedicated circuit or a general-purpose processor may be used, instead.

The storage unit 25 stores an information processing program 25P for causing the information processing apparatus 20 to function as an information processing apparatus in the present disclosure. The CPU 22 reads the information processing program 25P from the storage unit 25 and loads the information processing program 25P into the RAM 23 to perform processing. By executing the information processing program 25P, the information processing apparatus 20 operates as the information processing apparatus in the present disclosure. The information processing program 25P may be provided in a storage medium such as a compact disc read-only memory (CD-ROM). Specific processes performed by the information processing apparatus 20 will be described later.

An auxiliary storage device such as a hard disk drive (HDD), a solid-state drive (SSD), or a flash memory, for example, is used as the storage unit 25.

The information processing program 25P may be stored in a ROM 12C, instead. Alternatively, for example, the information processing program 25P may be installed on the information processing apparatus 20 in advance. Alternatively, the information processing program 25P may be achieved by installing, on the information processing apparatus 20, program information stored in a nonvolatile storage medium or distributed over the network, which is not illustrated. Examples of the nonvolatile storage medium include a CD-ROM, a magneto-optical (MO) disk, an HDD, a digital versatile disc read-only memory (DVD-ROM), a flash memory, and a memory card.

The storage unit 25 also stores a system program 25S for the information processing apparatus 20 to achieve functions in OCR. The CPU 22 reads the system program 25S from the storage unit 25 and loads the system program 25S into the RAM 23 to perform OCR. By executing the system program 25S, the information processing apparatus 20 becomes able to achieve system functions in OCR.

Although the information processing program 25P and the system program 25S are separate programs in the present exemplary embodiment, the information processing program 25P may be executed as one of processes included in the system program 25S, instead.

The storage unit 25 also stores a database 25D including various pieces of information available to the information processing apparatus 20. The database 25D need not necessarily be stored in the storage unit 25 in advance. For example, the database 25D may be stored in an external apparatus that is not illustrated and obtained from the external apparatus through a communication link.

The communication unit 27 is connected to a communication network and achieves communication between the information processing apparatus 20 and external apparatuses. The communication network is a concept including a network for achieving data communication between devices through a wired and/or wireless communication link. For example, the communication network may be a narrow area communication network (e.g., a LAN) that achieves data communication at a corporate base or a wide area communication network (e.g., a wide area network (WAN)), such as the Internet, that achieves data communication through a public communication link.

Devices for inputting operations, such as a keyboard and a mouse, are provided as the operation input unit 28.

A liquid crystal display (LCD) or an organic electroluminescent (EL) display, for example, is used as the display unit 29. A touch panel having a function of the operation input unit 28 may be used as the display unit 29, instead. The operation input unit 28 and the display unit 29 receive various instructions from the user of the information processing apparatus 20. The display unit 29 displays results of processes performed in accordance with instructions received from the user, notifications about the processes, and various other pieces of information.

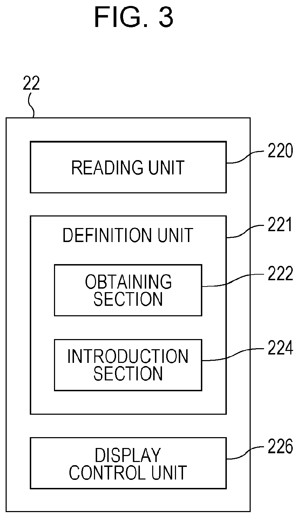

Fig. 3 is a block diagram illustrating an example of a functional configuration of the information processing apparatus 20 according to the present exemplary embodiment.

When the information processing apparatus 20 creates or edits an operation check for a target form, the information processing apparatus 20 presents definitions of processing for checking the operation check, the definitions having been registered for a similar form, in order to reduce a burden on the user in setting the operation check.

More specifically, as illustrated in Fig. 3, the CPU 22 of the information processing apparatus 20 according to the present exemplary embodiment functions as the information processing apparatus in the present disclosure by executing the information processing program 25P. The information processing apparatus in the present disclosure includes functional units that function as a reading unit 220, a definition unit 221, and a display control unit 226. The definition unit 221 includes an obtaining section 222 and an introduction section 224.

The reading unit 220 is a functional unit that reads an image of a form as a paper document and character string information written on the form. In the present exemplary embodiment, the reading unit 220 reads character string information by obtaining a reading result (character string information) corrected or identified using a result of character recognition performed on an image of a form on which character strings are written. More specifically, the reading unit 220 obtains character string information at an end of the reading result check and correction ((5) in Fig. 1) in the OCR performed by the information processing apparatus 20. The reading unit 220 can also read and obtain images of forms and various pieces of information for identifying the forms.

The definition unit 221 is a functional unit that defines processing for checking information written, as items, on a form to be subjected to an operation check. The definition unit 221 obtains, using the obtaining section 222, related information, which relates to a form, and definition information indicating definitions of an operation check performed on a registered form similar to a target form. The definition unit 221 then introduces, using the introduction section 224, the definition information regarding the registered similar form by applying the definition information as definitions of processing for checking an operation check to be performed on the target form.

More specifically, the obtaining section 222 is a functional unit that obtains related information, which relates to a form from which character string information has been read by the reading unit 220, and definition information indicating definitions of processing for checking information written on a form as items. The obtaining section 222 obtains related information regarding a target form (first form) and identifies a registered form (second form) associated with related information similar to the related information regarding the target form. The obtaining section 222 then obtains definition information indicating definitions of processing for checking information written on the registered form as items. The obtaining section 222 obtains the related information and the definition information in accordance with a predetermined obtaining condition.

The obtaining condition is a condition at a time when the related information and the definition information are obtained. The obtaining section 222 has a function of extracting the obtaining condition from the storage unit 25 (e.g., the database 25D).

The related information is information with which a form can be identified and includes element information indicating elements of the read form, such as image information, and identification information for identifying the form and a part of the form, such as a name. In a check on information written on a form as items, definitions of processing for checking a registered form might be available as definitions of processing for the check. Related information for identifying a relationship, for example, is used. That is, related information includes information with which a relationship between a form and another form can be checked. Information indicating a format of the form or at least a part of an image of the form is an example of the related information. For example, the user can check a relationship between a plurality of forms by comparing overall images of the forms with each other. Because forms used for similar types of processing are often given similar names, a relationship between the forms can be checked by comparing identification information regarding the forms, such as names.

A condition on whether to obtain image information regarding a form or identification information regarding the form, therefore, is an example of the obtaining condition for related information.

Definition information is information indicating definitions of processing for checking information written on a form as items and can be used for an operation check defined for the form. Definition information includes information indicating an operation check applicable to a form. Similar operation checks are often applied, for example, to forms having a relationship, that is, similar forms. In the present exemplary embodiment, therefore, a form associated with similar related information is identified, and definition information regarding the identified form is obtained.

A condition indicating a type of information to be obtained as information that can be used for an operation check defined for a form, therefore, is an example of the obtaining condition for definition information.

The obtaining section 222 has a function of extracting an obtaining condition, related information, and definition information from the storage unit 25 (e.g., the database 25D). The obtaining section 222 also has a function of determining similarity of related information when similar related information is identified.

Similarity of related information with which similar related information can be obtained, for example, as a degree of matching (matching level) between images of forms through image processing. The degree of similarity (matching level) can be obtained from a ratio of image areas matching between images of forms. A degree of similarity between images of forms can be used to check a relationship between the forms by comparing overall images of the forms. A matching level of a feature image corresponding to the user's appearance may be set higher than those of other images. Examples of the feature image include an image in which a name representing a form is written in a larger font and a shape image such as a format of a form including size and arrangement of frames and an arrangement pattern of character string information. A matching level between names can be obtained by determining similarity between characters indicating the names. A degree of similarity between characters can be obtained on the basis of a ratio of the number of characters matching between different pieces of character string information.

A threshold for a degree of similarity may be determined in advance for forms having similar appearances. Form images with which a degree of similarity exceeds the threshold may be determined to be similar to each other.

The introduction section 224 is a functional unit that introduces definition information regarding a registered similar form as definitions of processing for checking an operation check to be performed on a target form when the operation check is created or edited. The introduction section 224 is also a functional unit that outputs definition information regarding a registered similar form as a candidate for definition information to be applied to items on a target form (first form).

The introduction section 224 has a function of verifying conformity of definition information regarding a registered similar form.

Conformity is information indicating whether definition information regarding a registered similar form can be introduced as definitions of processing for checking an operation check to be performed on a target form, or a degree of conformity. In the verification, definition information regarding a registered similar form may be introduced to a target form, values of items on the target form may be given, and conformity of a result may be used as a verification result.

The display control unit 226 has a functional unit that displays the above-described various pieces of information (e.g., an image of a form and definition information) on the display unit 29.

Next, the operations performed by the information processing apparatus 20 according to the present exemplary embodiment will be described.

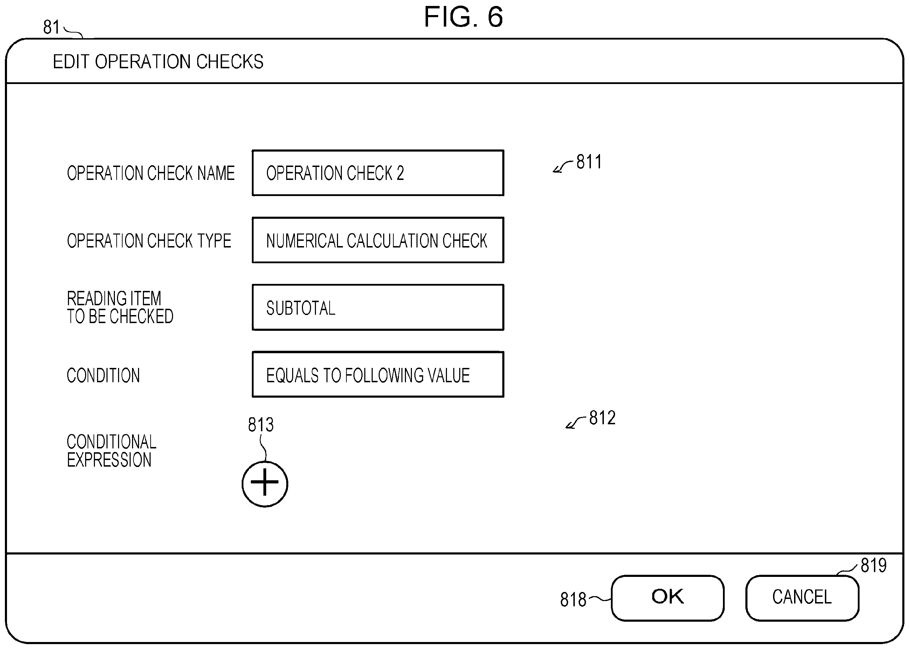

In the present exemplary embodiment, the operation checks ((6) in Fig. 6) in the OCR performed by the information processing apparatus 20 on image data regarding forms input through the input device 60 will be described. In the operation checks, first, a process for defining definition information indicating definitions of processing for checking information written on a form as items is performed using a reading result obtained from the form. That is, in the operation checks, processing for checking information written on a form as items is defined for operation check settings included in job rules for a job selected by the user from created job rules.

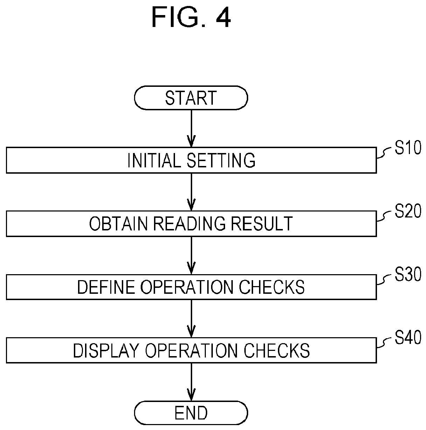

Fig. 4 is a flowchart illustrating an example of a procedure of information processing achieved by the information processing program 25P according to the present exemplary embodiment. In the information processing, a process for defining processing for checking information written on a target form as items, that is, a process for defining operation checks, is performed.

First, the information processing apparatus 20 is instructed to activate the information processing program 25P, and the CPU 22 performs the following steps.

In step S10, initial setting relating to the operation checks, namely numerical calculation checks in the present exemplary embodiment, is performed. In the initial setting, various pieces of information, such as operation check names for identifying content of the operation checks, are set.

In step S20, a reading result is obtained by obtaining character string information read from a form on which character strings are written. The character string information indicating the reading result can be obtained from a result obtained at an end of the reading result check and correction ((5) in Fig. 1) in the OCR performed by the information processing apparatus 20 by executing the system program 25S.

The processing in step S20 is an example of a function of the reading unit 220 illustrated in Fig. 3.

In step S30, operation checks to be performed on the target form are defined using definition information regarding operation checks performed on a registered form similar to a target form image. Details of the processing in step S30 will be described later.

The processing in step S30 is an example of functions of the definition unit 221, the obtaining section 222, and the introduction section 224 illustrated in Fig. 3.

In step S40, information indicating the operation checks is displayed, and the process achieved by the information processing program 25P ends. The information need not be collectively displayed in step S40, and may be displayed in the corresponding steps, instead.

The processing in step S40 is an example of a function of the display control unit 226 illustrated in Fig. 3.

Next, information processing including the above-described process for defining operation checks will be described in detail.

If the user requests setting of operation rules in order to define operation checks included in the job rules after the setting of job rules is completed for the operation checks, the information processing apparatus 20 performs processing for the operation check settings.

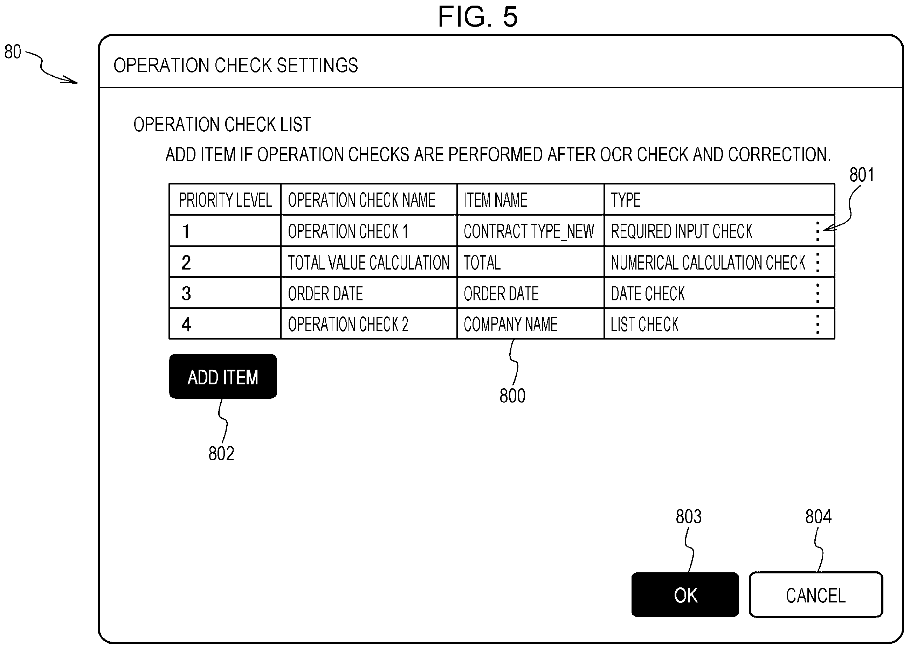

Fig. 5 is a diagram illustrating an example of a setting screen for an operation check list relating to the operation check settings.

A setting screen 80 illustrated in Fig. 5 is displayed by performing the processing for the operation check settings. The setting screen 80 is used to prompt the user to check types and settings of operation checks to be performed. An operation check list 800 indicating types of operation checks to be performed on the basis of the settings is displayed in the setting screen 80. Fig. 5 illustrates an operation check list 800 at a time when a required input check, a numerical calculation check, a date check, and a list check have been added as types of operation checks. The operation check list 800 is registered, for each of the operation checks to be performed, as a record in which a priority level, an operation check name, an item name, and a type are associated with one another. The priority level is information indicating order of execution of a corresponding operation check among the operation checks included in the operation check list 800. The operation check name is information indicating a name of a corresponding operation check. The item name is information indicating an item to be checked in a corresponding operation check. The type is information indicating a type of corresponding operation check. The operation check list 800 illustrated in Fig. 5 is not displayed for initial processing for the operation check settings.

In the setting screen 80, the user can set the operation check list 800 and the operation checks of different types using buttons. The setting screen 80 includes an add item button 802 for adding a new operation check to the operation check list 800. The setting screen 80 also includes an OK button 803 for ending the setting of the operation check list 800 and a cancel button 804 for canceling the setting of the operation check list 800. In the setting of the operation checks, one of edit processes such as edit, removal, and priority level change can be selected by pressing a corresponding one of edit buttons (indicated by three dots in Fig. 5) 801. If one of the edit buttons 801 is pressed and then one of the edit processes is selected, the edit process for settings of a corresponding operation check starts.

A case where a new operation check is added will be described hereinafter. If the add item button 802 is pressed, a process for adding a new operation check is performed, and settings relating to the new operation check are made.

Fig. 6 is a diagram illustrating an example of a setting screen relating to a process for editing operation check settings as settings relating to a new operation check.

When the process for adding a new operation check is performed, a setting screen 81 is displayed. Input fields 811 for inputting information regarding an operation check are displayed in the setting screen 81. The input fields 811 are editable. The input fields 811 may be displayed as drop-down lists, for example, so that an item to be input can be selected from predetermined items.

The setting screen 81 includes an OK button 818 for ending the setting of an operation check and a cancel button 819 for canceling the setting of an operation check. If the OK button 818 is pressed, the setting of the operation check list restarts, and the setting screen 80 for the operation check list illustrated in Fig. 5 is displayed again. If new items of an operation check are created, the created items are added to the operation check list 800. If the cancel button 819 is pressed, on the other hand, the items are discarded. The setting of the operation check list then restarts, and the setting screen 80 for the operation check list illustrated in Fig. 5 is displayed again.

A process for setting information input in the input fields 811 is an example of the processing in step S20.

The setting screen 81 also includes, under the input fields 811, input fields 812 for inputting a conditional expression as a condition. The input fields 812 are editable. The user can input a setting to each of the input fields 812.

### Process for Using Existing Definitions

When the user needs to sequentially input the operation check settings, a burden on the user increases. In the present exemplary embodiment, therefore, a computer presents related information regarding a form similar to a form to be subjected to an operation check to be set (defined) to assist the user in setting the operation check.

More specifically, if the OK button 818 illustrated in Fig. 6 is pressed, a process for using existing definitions, in which an operation check is defined, is performed as a process for defining an operation check on the basis of the related information (e.g., a form image) regarding the registered form similar to the target form.

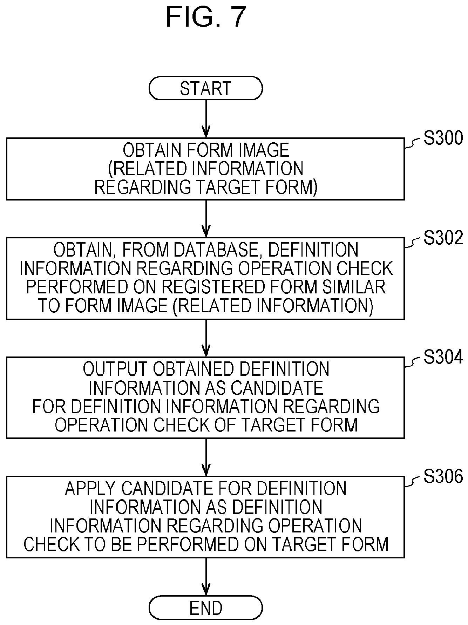

Fig. 7 is a flowchart illustrating an example of a procedure of a process for using existing definitions included in the information processing achieved by the information processing program 25P.

First, the information processing apparatus 20 is instructed to activate the information processing program 25P, and the CPU 22 performs the following steps.

In step S300, the CPU 22 obtains information indicating an image of a target form (hereinafter referred to as a target form image) to be subjected to an operation check. That is, the CPU 22 obtains related information regarding a target form (first form) to be created (edited). Image information regarding the target form image read in the OCR performed by executing the system program 25S using the information processing apparatus 20 can be applied as the information indicating the target form image.

In step S302, the CPU 22 obtains definition information regarding an operation check performed on a registered form similar to the target form image from a database. That is, the CPU 22 performs a process for obtaining, from the database 25D, definition information regarding processing for checking items on the registered form (second form) having related information similar to related information regarding the target form (first form).

The processing in steps S300 and S302 is an example of part of a function of the definition unit 221 and a function of the obtaining section 222.

In step S304, the CPU 22 outputs the obtained definition information as a candidate for definition information regarding the operation check to be performed on the target form. The CPU 22 performs a process for outputting the obtained definition information, that is, the definition information applied to the registered form (second form), as a candidate for definition information regarding processing for checking items on the target form (first form).

In step S306, the CPU 22 applies the candidate for definition information as the definition information regarding the operation check to be performed on the target form. The CPU 22 performs a process for applying the candidate for definition information, that is, the definition information applied to the registered form (second form), as the definition information regarding the processing for checking the items on the target form (first form).

The processing in steps S304 and S306 is an example of a part of a function of the definition unit 221 and a function of the introduction section 224 illustrated in Fig. 3.

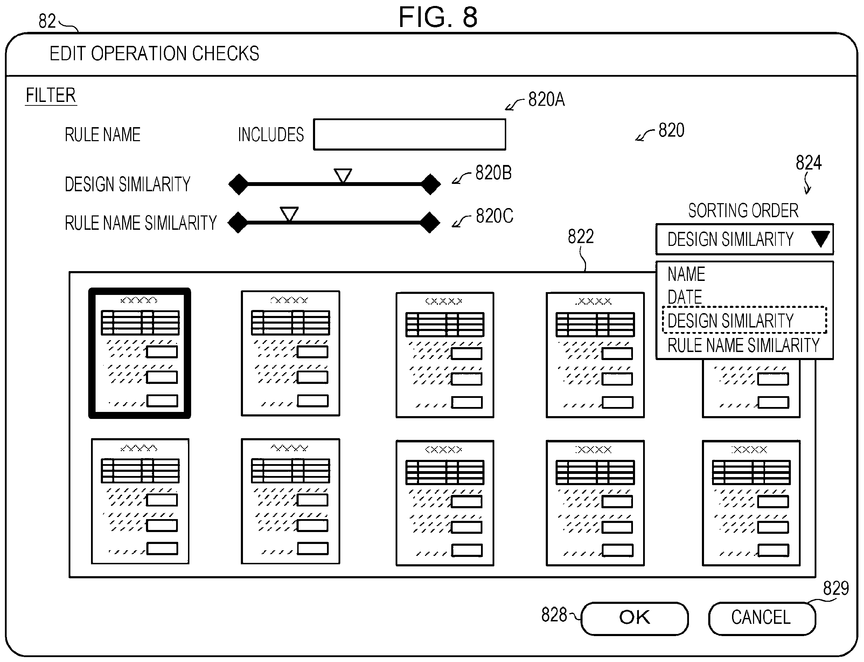

Fig. 8 is a diagram illustrating, as a screen 82, an example of a screen displayed in the process for using existing definitions.

The screen 82 includes a display area 820 for specifying a degree of similarity that can be set by the user, a display area 822 for displaying similar forms, and a specification area 824 for specifying order in which form images are displayed.

In the example illustrated in Fig. 8, the display area 820 includes an input area 820A for inputting, as a first condition for specifying a degree of similarity, character string information included in a "rule name", which is a condition for names of a job rule and an operation check. The display area 820 also includes a slide bar 820B that indicates, as a second condition, a condition for a degree of similarity of a form image as "design similarity" and with which a degree of similarity can be adjusted from lowest to highest (e.g., perfect match). The display area 820 also includes a slide bar 820C that indicates, as a third condition, a condition for a degree of similarity of character string information included in the rule name as "rule name similarity" and with which a degree of similarity can be adjusted from lowest to highest (e.g., perfect match).

Images (e.g., thumbnail images) obtained by reducing in size forms whose related information (e.g., form images) is similar so that the entirety of the forms can be viewed are displayed in the display area 822. The form images in the display area 822 are displayed such that one of the form images can be selected. In the example illustrated in Fig. 8, a selected form image is surrounded by a thick line so that a selected form can be identified.

The specification area 824 is displayed as a pull-down menu or the like so that order in which the form images displayed in the display area 822 are arranged can be selected from predetermined setting values. In the example illustrated in Fig. 8, the order of the form images is indicated as "sorting order", and the form images can be rearranged in order of, for example, "name", "date", "design similarity", or "rule name similarity".

If the user presses an OK button 828 after selecting a desired form, the information processing apparatus 20 proceeds to next processing.

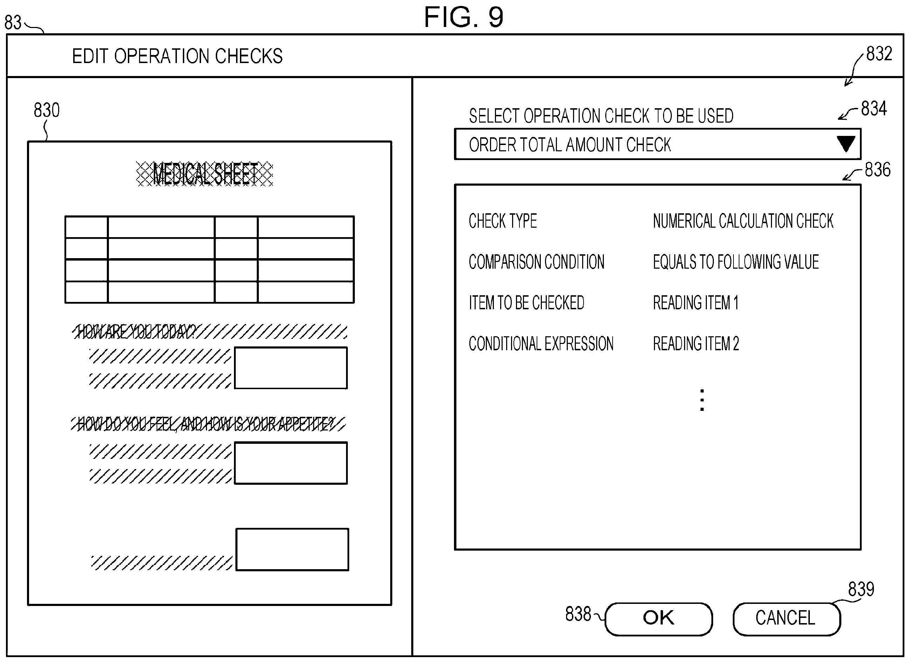

Fig. 9 is a diagram illustrating, as a screen 83, an example of a screen displayed when an operation check to be used is specified.

The screen 83 is displayed when an operation to be used is selected from a plurality of operation checks included in a form selected in the process for using existing definitions. When the selected form includes only one operation check, next processing need not be performed.

As illustrated in Fig. 9, an image 830 of the selected registered form (second form) is displayed in the screen 83. The screen 83 also includes a display area 832 for displaying an operation check set for the registered form. The screen 83 also includes an OK button 838 and a cancel button 839.

The display area 832 includes a display area 834 for allowing the user to select an operation check to be defined from one or a plurality of operation checks set for the registered form. The display area 834 is displayed as a pull-down menu or the like so that one of the one or plurality of operation checks set for the registered form can be selected. A display area 836 for displaying content of the selected operation check is displayed under the display area 834. The user can check the content of the selected operation check by checking the content of the operation check displayed in the display area 836.

As described above, the information processing apparatus 20 (CPU 22) obtains related information (form image) regarding a target form (first form) (step S300 in Fig. 7) and information regarding a registered form (second form) similar to the form image from the database 25D (step S302). The information processing apparatus 20 displays an image of the registered form (second form) as a candidate for a form to be subjected to a check (operation check) on items on the target form (first form) (step S304). Here, the image of the registered form (second form) is displayed as a candidate for a form. Definition information regarding the registered form (second form) is output as a candidate for definition information regarding the operation check to be performed on the target form. The definition information regarding the selected form is then applied as definition information for defining the items (operation check) on the target form (first form) (step S306).

### Search Process

When the operation check settings, that is, processing for checking information written on a form as items, are defined, a similar form may be extracted from registered forms in accordance with the user's intention. For example, the user might actively desire to present a similar form.

In the present exemplary embodiment, therefore, a process for searching registered forms for a similar form in accordance with the user's intention may be performed. Content of an operation check to be defined may then be presented, in a selectable manner, from among search results to assist the user in setting the operation check.

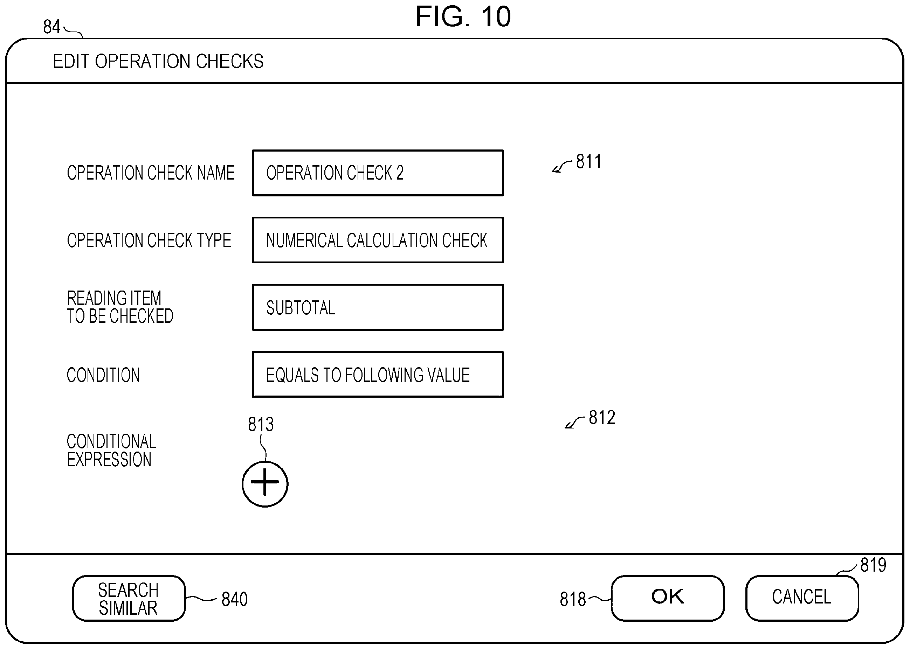

Fig. 10 is a diagram illustrating, as a setting screen 84, an example of a setting screen relating to a process for editing operation check settings.

In the setting screen 84 illustrated in Fig. 10, a search similar button 840 is added to the setting screen 81 illustrated in Fig. 6. That is, the setting screen 84 includes, under the input fields 812, the search similar button 814 for searching for similar operation checks and presenting search results. Here, when the add item button 802 illustrated in Fig. 5 is pressed, the setting screen 84 illustrated in Fig. 10 is displayed.

When the search similar button 840 is pressed, the CPU 22 performs a process for searching for registered forms similar to a form intended by the user.

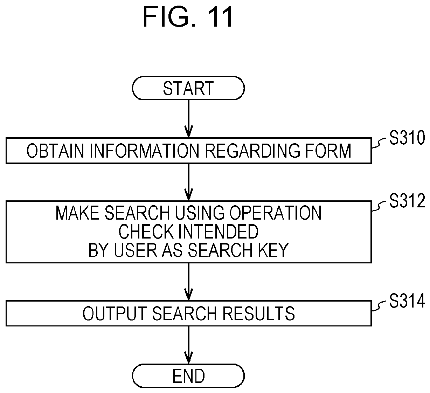

Fig. 11 is a flowchart illustrating an example of a procedure of the search process included in the information processing achieved by the information processing program 25P.

When the CPU 22 of the information processing apparatus 20 obtains information indicating that the search similar button 840 has been pressed, the CPU 22 activates the search process included in the information processing program 25P and performs the following steps.

In step S310, the CPU 22 obtains information regarding a form. The information regarding the form is information regarding an operation check indicating content of a check on information written, as items, on a form intended by the user.

In step S312, forms registered in the database 25D are searched using the information obtained in step S310, that is, content of the operation check intended by the user, as a search key.

In step S314, search results found in the processing in step S312 are output, that is, search results are displayed on the screen, and the processing routine ends.

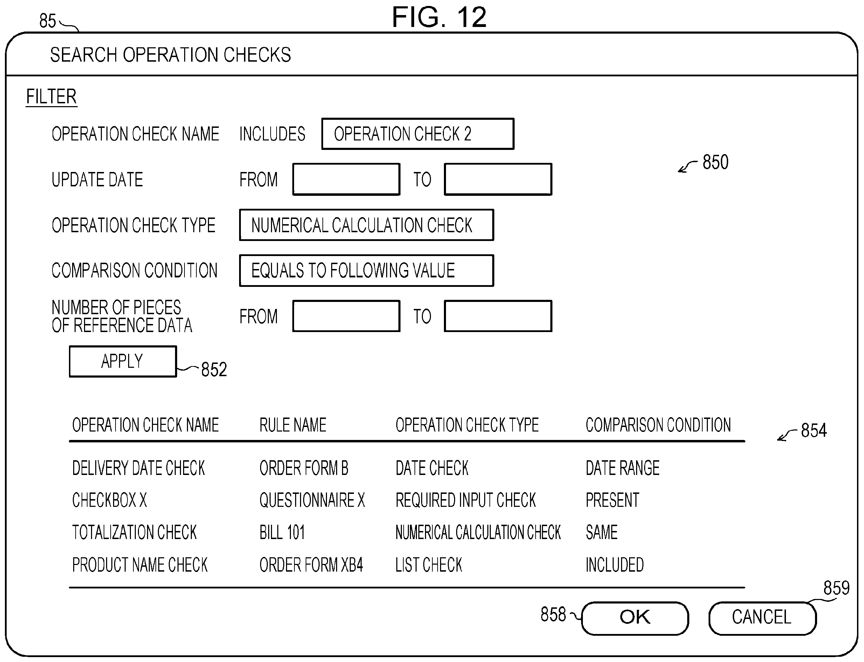

Fig. 12 is a diagram illustrating, as a screen 85, an example of a display screen in the search process.

As illustrated in Fig. 12, a display area 850 for displaying content of an operation check intended by the user is displayed in the screen 85. When information regarding an operation check has already been input, the information (the information input in the input fields 811 illustrated in Fig. 10) can be reflected in the display area 850 illustrated in Fig. 12. The user can correct the information displayed in the display area 850. Obtaining of information from the display area 850 is an example of the processing in step S310.

The screen 85 also includes an apply button 852 for making a search in accordance with the user's intention. Pressing of the apply button 852 is an example of a timing at which the process proceeds to step S312.

The screen 85 also includes a display area 854 for displaying search results. The screen 85 also includes an OK button 858 for proceeding to next processing and a cancel button 859 for canceling the search process and returning to a previous process.

### Process for Checking Operation Check

Whether an operation check defined using another operation check performed on a similar form is an appropriate operation check intended by the user may be checked. When the user applies (uses) an operation check performed on a similar form, for example, the user might desire to check content of a candidate for an operation check before applying (using) the operation check. In the present exemplary embodiment, therefore, the user can be assisted in setting an operation check by verifying content of an operation check performed on a registered similar form, which is a candidate for definition information, and performing a check process, by which a result of the verification is checked.

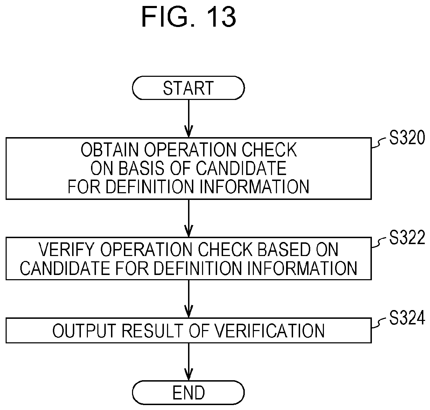

Fig. 13 is a flowchart illustrating an example of a procedure of the check process. The information processing apparatus 20 is instructed to activate the check process included in the information processing program 25P, and the CPU 22 performs the following steps.

In step S320, the CPU 22 obtains information indicating an operation check based on a candidate for definition information. In a next step S322, the operation check based on the candidate for definition information is verified using the obtained information indicating the operation check. In a next step S324, the CPU 22 outputs a result of the verification. In the verification of the operation check, a parameter input by the user can be received, and processing relating to the operation check can be performed using the parameter. As a result, the user can check content of a candidate for an operation check before applying (using) the candidate for the operation check as an operation check to be performed on a target form.

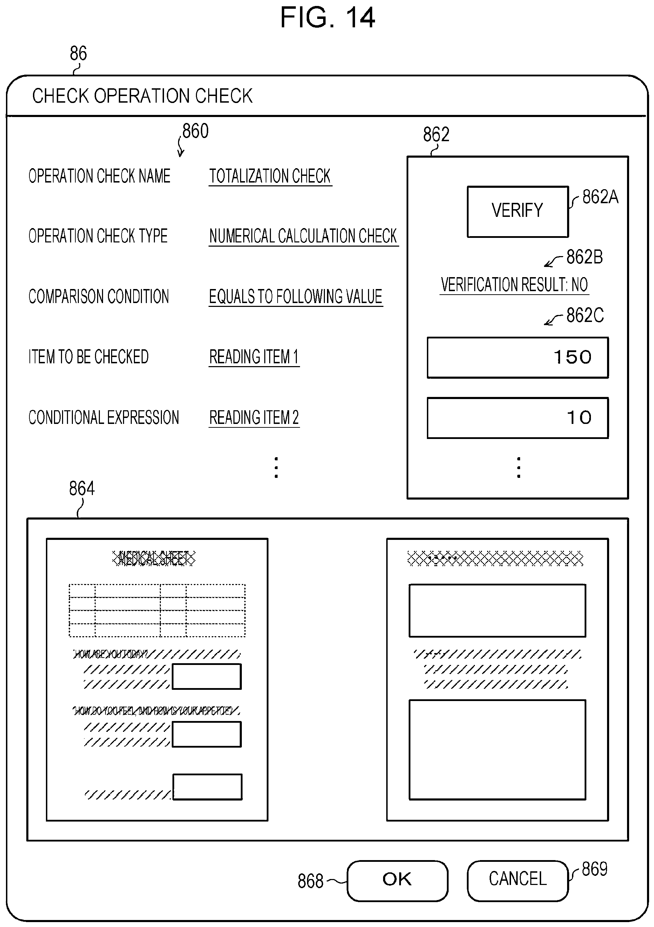

Fig. 14 is a diagram illustrating, as a check screen 86, an example of a check screen displayed in the check process.

The check screen 86 includes display areas 860, 862, and 864, an OK button 868, and a cancel button 869. The OK button 868 is used to proceed to next processing, in which definition information regarding a checked operation check is applied. The cancel button 869 is used to cancel application of definition information regarding a checked operation check.

The display area 860 is used to display definition information regarding an operation check. When definition information regarding an operation check is displayed in the display area 860, the user can be prompted to check content of the definition information.

The display area 862 is an area in which information regarding verification of an operation check is displayed and includes a verify button 862A for starting the verification, a display area 862B for displaying a result of the verification, and a display area 862C for displaying values to be verified for items to be checked. The display area 862C includes text boxes or the like for allowing the user to set values.

Input values in the display area 862C including text boxes or the like, that is, values to be verified for items to be checked, are an example of parameters of processing for a check in the present disclosure.

In the check process, when values for items intended by the user are set in the display area 862C and the verify button 862A is pressed, the CPU 22 performs the verification. Information indicating a result of the verification, which is a result of execution of the verification, is displayed in the display area 862B ("NO" in Fig. 14). By displaying the result of the verification in the display area 862B, the user can check whether an operation check performed on a similar form set as a candidate is an appropriate operation check intended by the user.

The display area 864 is used to display form images. The images displayed in the display area 864 are images of a similar form set as a candidate. In the example illustrated in Fig. 14, a plurality of pages (two pages) of the form are displayed. In the form images displayed in the display area 862, reading frames on the form surrounding items to be subjected to the operation check are also displayed. By displaying the reading frames, the user can check information indicating positions of information on a similar form set as a candidate at which the operation check is to be performed.

### Process for Verifying Introduction of Operation Check

An operation check can be checked in the above-described check process. Whether an operation check defined using an operation check performed on a similar form is appropriate as an operation check to be performed on a target form, however, may be verified. When the user applies (uses) an operation check performed on a similar form, for example, the user might desire to verify, before the operation check is applied (used), the operation check applied (used) as an operation check to be performed on a target form. In the present exemplary embodiment, therefore, an operation check performed on a registered similar form is provisionally applied as an operation check to be performed on a target form and verified, and a process for verifying introduction, in which a result of verification is presented, is performed, thereby assisting the user in setting the operation check.

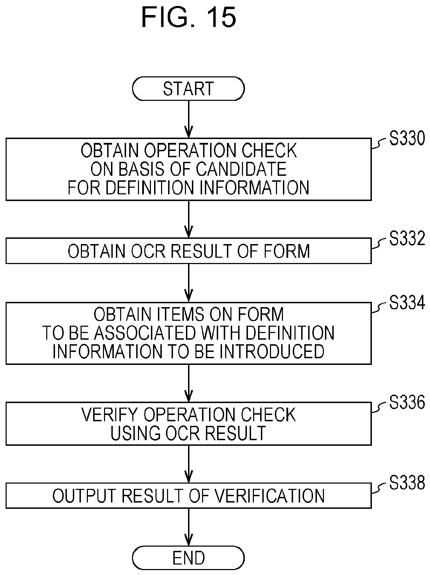

Fig. 15 is a flowchart illustrating an example of a procedure of the process for verifying introduction. The information processing apparatus 20 is instructed to activate the process for verifying introduction included in the information processing program 25P, and the CPU 22 performs the following steps. The process for verifying introduction can be performed after the check process or independently.

In step S330, the CPU 22 obtains information indicating an operation check based on a candidate for definition information. In a next step S332, the CPU 22 obtains a reading result read from a target form. That is, the CPU 22 obtains OCR result (character string information) regarding the target form for which the operation check is to be defined. Next, in step S334, the CPU 22 obtains information indicating items on the target form to obtain information indicating items to be associated with the definition information to be introduced. In a next step S336, the CPU 22 verifies the operation check based on the definition information regarding the form set as the candidate using the OCR result (character string information). In step S338, the CPU 22 outputs the result of the verification, and the processing routine ends. The user can thus check content of a candidate for an operation check before applying (using) the candidate for the operation check as an operation check to be performed on a target form.

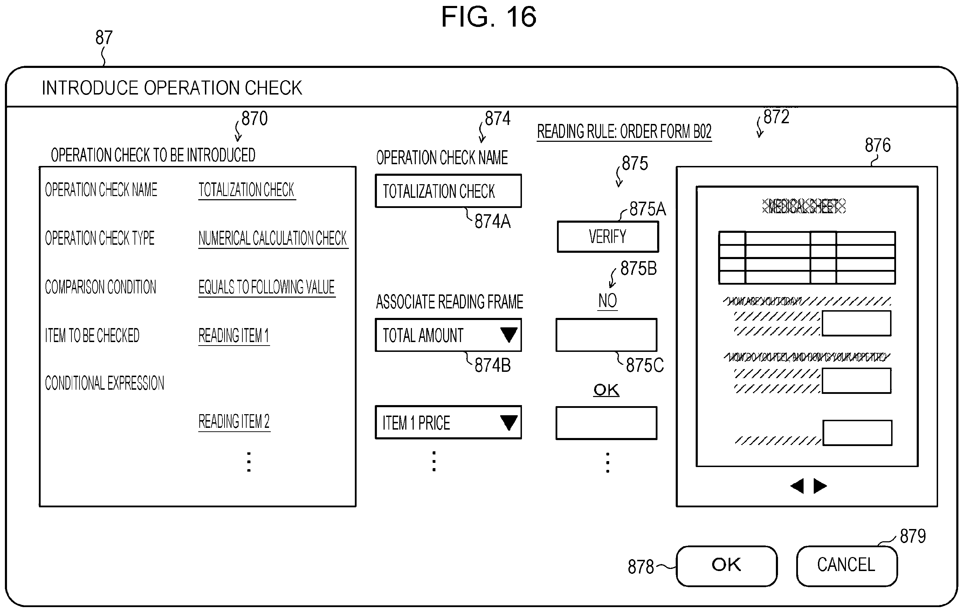

Fig. 16 is a diagram illustrating, as a check screen 87, an example of a check screen displayed in the process for verifying introduction.

The check screen 87 includes display areas 870 and 872, an OK button 878, and a cancel button 879. The OK button 878 is used to proceed to next processing, in which definition information regarding a checked operation check is applied. The cancel button 879 is used to cancel application of definition information regarding a checked operation check.

In the display area 870, definition information (i.e., definition information regarding an operation check performed on a registered similar form, which is an original form) regarding an operation check to be introduced is displayed. By displaying the definition information in the display area 870, the user can check definitions of an operation check to be introduced.

In the display area 872, information regarding a target form (i.e., a destination form) to which definition information regarding an operation check is to be introduced is displayed. The display area 872 includes display areas 874, 875, and 876. The display area 874 is an area in which the definition information regarding the operation check to be performed on the target form is displayed and includes display areas 874A and 874B. The display area 874A is an area in which a name of the operation check to be performed on the target form is displayed while being associated with a name of the operation check to be introduced. The display area 874B is an area in which items on the target form are displayed and associated with reading frames on the target form surrounding the items. The display area 875 is an area in which information regarding verification of the operation check to be performed on the target form is displayed and includes a verify button 875A for starting the verification, a display area 875B for displaying a result of the verification, and a display area 875C for displaying values to be verified for items to be checked. The display area 875C is an area in which values included in an OCR result can be set. The display area 876 is an area in which an image of the target form is displayed.

In the process for verifying introduction, the items (an area corresponding to the reading frames) on the destination form are set in the display area 874 for items intended by the user, and when the verify button 875A is pressed, the CPU 22 performs the process for verifying introduction. In the process for verifying introduction, the operation check is performed using the values included in the OCR result (the values displayed in the display area 875C), and information indicating a result of the verification, which is a result of execution of the operation check, is displayed in the display area 875B item by item. By displaying the result of the verification in the display area 875B, the user can check whether the operation check set as a candidate as the operation check performed on the original form can be applied as the operation check to be performed on the destination form.

The display area 876 is an area in which an image of the destination form is displayed. Reading frames on the destination form corresponding to the items of the operation check displayed in the display area 874 are also displayed on the displayed image. By displaying the reading frames, the user can check information indicating positions (items) on the destination form at which the operation check is to be performed.

As described above, according to the present exemplary embodiment, when processing for checking information written on a form is defined, a burden on the user can be reduced compared to when the user needs to define each of items on the form.

Although the techniques in the present disclosure have been described with reference to an exemplary embodiment, the technical scope of the techniques in the present disclosure is not limited to the exemplary embodiment. The exemplary embodiment may be modified or improved in various ways without deviating from the scope of the present disclosure. The technical scope of the techniques in the present disclosure also includes such modifications and improvements.

In addition, although the processes are achieved by executing the programs stored in the auxiliary storage device in the above exemplary embodiment, at least part of the processes achieved by the programs may be achieved by hardware, instead. The procedures of the processes achieved by the programs described in the exemplary embodiment are also examples, and some steps may be removed, new steps may be added, or processing order may be changed without deviating from the scope of the present disclosure.

Furthermore, the processes in the above exemplary embodiment may be stored in a storage medium such as an optical disc as programs and distributed, instead.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. An information processing apparatus comprising:
a processor configured to:
obtain related information regarding a first form;
identify a second form associated with related information similar to the related information regarding the first form;
obtain definition information indicating a definition of processing for a check on information written on the second form as items; and
output the definition information as a candidate for definition information to be applied to items on the first form.

2. The information processing apparatus according to Claim 1,
wherein the related information indicates at least image information regarding a form or identification information for identifying the definition information.

3. The information processing apparatus according to Claim 1,
wherein the processor is configured to, if a plurality of pieces of definition information are obtained as the definition information, output the definition information in descending order of a degree of similarity.

4. The information processing apparatus according to any one of Claims 1 to 3,
wherein the processor is configured to output information indicating the processing for the check corresponding to the obtained definition information.

5. The information processing apparatus according to Claim 4,
wherein the processor is configured to output information indicating a result of execution of the processing for the check corresponding to the obtained definition information.

6. The information processing apparatus according to Claim 5,
wherein the result is a result of execution of the processing for the check based on a parameter of the processing for the check input by a user.

7. The information processing apparatus according to Claim 5,
wherein the result is a result of execution of the processing for the check on the items on the first form.

8. The information processing apparatus according to Claim 7,
wherein the processor is configured to receive, from a user, selection of one of the items on the first form on which the processing for the check is to be performed.

9. The information processing apparatus according to any one of Claims 1 to 5,
wherein the processor is configured to, if a plurality of pieces of definition information are obtained as the definition information, output one of the plurality of pieces of definition information obtained as the definition information such that the one of the plurality of pieces of definition information is selectable.

10. A program causing a processor to execute a process for processing information, the process comprising:
obtaining related information regarding a first form;
identifying a second form associated with related information similar to the related information regarding the first form;
obtaining definition information indicating a definition of processing for a check on information written on the second form as items; and
outputting the definition information as a candidate for definition information to be applied to items on the first form.

11. A method for processing information, the method comprising:
obtaining related information regarding a first form;
identifying a second form associated with related information similar to the related information regarding the first form;
obtaining definition information indicating a definition of processing for a check on information written on the second form as items; and
outputting the definition information as a candidate for definition information to be applied to items on the first form.
